# FASCICULE DE BREVET EUROPEEN

(11) **EP 3 529 099 B1**
(45) Date de publication et mention de la délivrance du brevet: **24.03.2021**
(21) Numéro de dépôt: 17780476.2
(22) Date de dépôt: 13.09.2017
(51) Int. Cl.: B60K 28/06, B60W 40/08

(54) **PROCEDE ET SYSTEME DE CONTROLE D'UNE UTILISATION D'UN VEHICULE PAR UN CONDUCTEUR**
VERFAHREN UND SYSTEM ZUR STEUERUNG DER VERWENDUNG EINES FAHRZEUGS DURCH EINEN FAHRER
METHOD AND SYSTEM FOR CONTROLLING A USE OF A VEHICLE BY A DRIVER

(30) Priorité: 18.10.2016 FR 1660096
(43) Date de publication de la demande: 28.08.2019
(73) Titulaire: Renault S.A.S., 92100 Boulogne-Billancourt (FR)
(72) Inventeur: VIDAL, Quentin, 91300 Massy (FR); REGNIER, Stéphane, 91370 Verrieres Le Buisson (FR)
(86) Numéro de dépôt international: PCT/FR2017/052442
(87) Numéro de publication internationale: WO 2018/073503

(56) Documents cités:
- EP-A1- 2 075 151
- EP-A1- 2 281 709
- EP-A1- 2 390 129
- DE-B3-102004 005 163
- FR-A1- 3 042 280

## Description

La présente invention concerne un procédé de contrôle d'une utilisation d'un véhicule par un conducteur et un système mettant en œuvre ledit procédé.

L'invention concerne également un véhicule, notamment un véhicule automobile, comportant un tel système ainsi qu'un programme d'ordinateur comprenant des instructions de code de programme pour l'exécution des étapes de ce procédé.

Il existe dans l'état de la technique différents procédés permettant de contrôler une utilisation d'un véhicule automobile sous la réserve qu'une condition d'utilisation de ce dernier soit validée. Cette condition d'utilisation du véhicule peut être liée à un état physique du conducteur qui doit être satisfaisant pour assurer le pilotage du véhicule à savoir s'il présente par exemple un taux d'alcoolémie supérieure à un taux seuil en vigueur sur le réseau routier sur lequel le véhicule est amené à circuler.

Dans ce contexte, on connaît un document EP2390129 qui décrit un procédé permettant de vérifier qu'un conducteur fait un usage correct d'un dispositif de mesure d'un taux d'alcoolémie d'un véhicule, à partir d'une caméra permettant d'assurer une reconnaissance faciale de ce dernier avant d'autoriser une utilisation de ce véhicule et ce, à condition que le taux d'alcoolémie mesuré de ce conducteur soit situé en-dessous du taux seuil.

On connaît également d'autres procédés sensiblement similaires prévoyant de manière supplémentaire dans un document EP2281709A1, une utilisation d'un capteur de pression compris dans un siège conducteur combinée à celle de la caméra, le procédé décrit comprenant une étape de contrôle réalisée avant et après l'usage fait du dispositif de mesure d'un taux d'alcoolémie afin de prévenir une utilisation frauduleuse de ce dispositif de mesure par une autre personne que le conducteur. Dans un autre procédé décrit dans le document EP2075151A1, la reconnaissance du conducteur est améliorée par la mise en œuvre d'une identification plus précise de ce dernier en plus des utilisations combinées de la caméra et du capteur de pression On connaît également le procédé divulgué dans EP2281709A1.

Toutefois de tels procédés ne garantissent pas que la personne qui a satisfait à la condition d'utilisation du véhicule en ayant un taux d'alcoolémie situé en-dessous du taux seuil, est le conducteur qui assure le pilotage du véhicule pendant toute une phase d'utilisation du véhicule. La présente invention vise à pallier ces inconvénients liés à l'état de la technique.

Dans ce dessein, l'invention concerne un procédé de contrôle d'une utilisation d'un véhicule par un conducteur selon la revendication 1 et comprenant les étapes suivantes :
- une étape d'identification du conducteur comportant une sous-étape de reconnaissance faciale du conducteur ;
- une étape de validation par le conducteur d'une condition d'utilisation du véhicule, et
- une étape de vérification durant une phase d'utilisation du véhicule que le conducteur identifié correspond au conducteur pilotant le véhicule.

Selon l'invention, l'étape d'identification comprend une sous-étape de reconnaissance d'un code visuel transmis par un dispositif de diffusion de code visuel.

Avantageusement, ce procédé comporte :
- l'étape de validation qui comprend une sous-étape de contrôle d'un taux d'alcoolémie du conducteur lors de laquelle un module de validation est manipulé par le conducteur de manière à réaliser une mesure du taux d'alcoolémie dont une valeur est déterminée par le module de validation, et/ou
- l'étape de validation comprenant une sous-étape d'évaluation d'un taux d'alcoolémie du conducteur lors de laquelle une valeur mesurée du taux d'alcoolémie du conducteur est comparée à une valeur de référence de taux d'alcoolémie, et/ou
- une étape de diffusion d'un message au conducteur si une valeur mesurée du taux d'alcoolémie du conducteur identifié est supérieure ou égale à une valeur de référence, et/ou
- une étape d'authentification dudit conducteur dès lors qu'une valeur mesurée d'un taux d'alcoolémie du conducteur identifié est inférieure à une valeur de référence.

En particulier, l'étape de validation comprend :
- une sous-étape de génération par l'unité de traitement d'un message à partir de données d'information relatives à la condition d'utilisation du véhicule, notamment comprenant des règles d'utilisation du véhicule en autopartage ou en location ou fonctionnant dans une mode autonome ;
- une sous-étape de transmission d'un message par l'unité de traitement à un module de validation, et
- une sous-étape d'envoi d'un signal à une unité de traitement généré à la suite d'une manipulation d'éléments de saisie du module de validation, ledit signal comprenant des données relatives à l'acceptation ou au refus de la condition d'utilisation.

Avantageusement, le procédé comporte :
- l'étape de vérification comprenant une sous-étape de détection d'au moins un évènement lié à un déplacement anormal du conducteur dans un cockpit du véhicule, et/ou
- une sous-étape de détection d'une étape de vérification prévoit une génération d'une instruction envoyée à un dispositif de contrôle du fonctionnement d'un moteur du véhicule visant à inhiber tout redémarrage de ce moteur si un tel moteur est à l'arrêt, et/ou
- une sous-étape de détection d'une étape de vérification prévoit une exécution des étapes de détection, d'identification, de validation, diffusion d'authentification et de vérification du procédé, et/ou
- une sous-étape de reconnaissance d'un code visuel de l'étape d'identification prévoit une génération aléatoire de ce code.

L'invention concerne également un système de contrôle d'une utilisation d'un véhicule par un conducteur mettant en œuvre ce procédé, le système comprenant un dispositif de reconnaissance optique, un module de validation d'une condition d'utilisation du véhicule et un dispositif de diffusion d'un code visuel connectés à une unité de traitement dudit système par l'intermédiaire d'un réseau de liaison de ce système.

En particulier, le système comprend le module de validation d'une condition d'utilisation du véhicule comportant un sous-module de mesure d'un taux d'alcoolémie et le dispositif de diffusion d'un code visuel et/ou une interface homme machine.

Avantageusement, le module de validation d'une condition d'utilisation du véhicule comprend une interface homme-machine.

L'invention concerne également un programme d'ordinateur comprenant des instructions de code de programme pour l'exécution des étapes de ce procédé lorsque ledit programme est exécuté par une unité de traitement d'un tel système.

L'invention concerne aussi un véhicule notamment un véhicule automobile comprenant un tel système.

D'autres avantages et caractéristiques de l'invention apparaîtront mieux à la lecture de la description de trois modes de réalisation préférés qui vont suivre, en référence aux figures, réalisés à titre d'exemple indicatif et non limitatif :
- la figure 1A est une représentation schématique d'un système de contrôle d'une utilisation d'un véhicule par un conducteur, selon le premier mode de réalisation de l'invention ;
- la figure 1B est une représentation schématique du système de contrôle de l'utilisation du véhicule par le conducteur, selon les deuxième et troisième modes de réalisation de l'invention ;
- la figure 2 est une représentation schématique d'un cockpit d'un véhicule comprenant en tout ou partie le système de contrôle, selon le premier mode de réalisation de l'invention ;
- la figure 3 est une représentation schématique d'un conducteur du véhicule utilisant un module de validation d'une condition d'utilisation du véhicule du système de contrôle, selon le premier mode de réalisation de l'invention, et
- la figure 4 est une courbe représentant la diminution d'un taux d'alcool dans le sang du conducteur en fonction du temps, laquelle courbe étant susceptible d'être affichée dans un message diffusé par un écran d'une interface homme-machine du système de contrôle, selon le premier mode de réalisation de l'invention ;
- la figure 5A représente un logigramme d'un procédé de contrôle de l'utilisation du véhicule par le conducteur, selon le premier mode de réalisation de l'invention ;
- la figure 5B représente un logigramme du procédé de contrôle de l'utilisation du véhicule par le conducteur, selon le deuxième mode de réalisation de l'invention, et
- la figure 5C représente un logigramme du procédé de contrôle de l'utilisation du véhicule par le conducteur, selon le troisième mode de réalisation de l'invention.

Dans la description qui va suivre, des chiffres de référence identiques désignent des pièces identiques ou ayant des fonctions similaires.

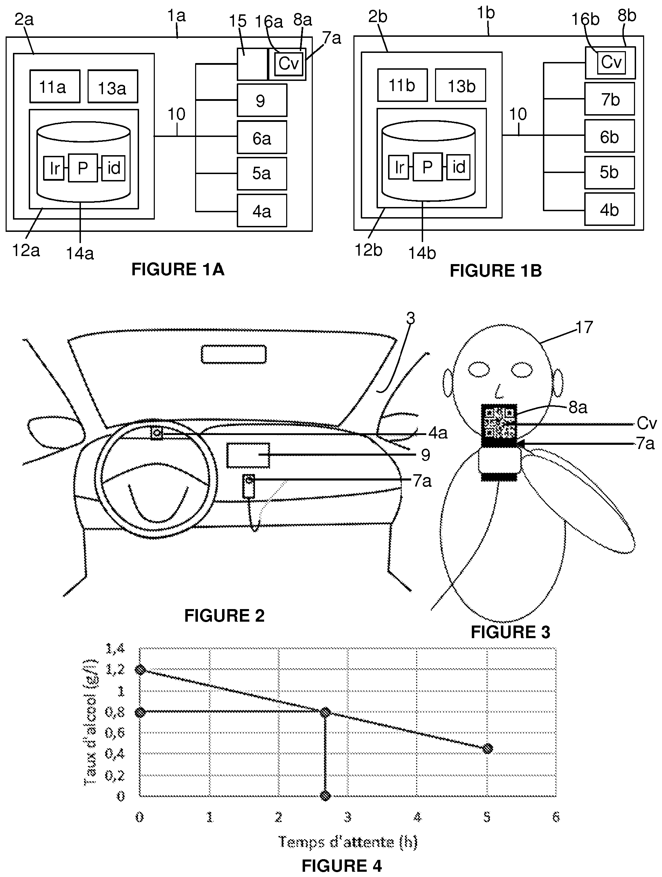

Dans les trois modes de réalisation de l'invention représentés sur les figures 1A et 1B, le système de contrôle 1a, 1b de l'utilisation du véhicule par le conducteur 17 peut être mis en œuvre dans un véhicule comme un véhicule terrestre notamment un véhicule automobile ou encore un véhicule marin ou aérien. Dans les modes de réalisation de l'invention qui sont décrits par la suite, on considère que le véhicule est un véhicule automobile.

Un tel système 1a, 1b comprend une unité de traitement 2a, 2b, un dispositif de reconnaissance optique 4a, 4b, un dispositif de contrôle du fonctionnement du moteur 5a, 5b, des capteurs d'activité 6a, 6b et un réseau de liaison 10.

Dans ce système 1a, 1b, l'unité de traitement 2a, 2b comprend des ressources matérielles et logicielles et plus précisément au moins un processeur 11a, 11b coopérant avec des éléments de mémoire 12a, 12b. Ces ressources matérielles et logicielles sont aptes à exécuter des instructions pour la mise en œuvre d'un programme d'ordinateur. L'unité de traitement 2a, 2b peut également comprendre un module de communication 13a, 13b apte à mettre en œuvre différents protocoles de communication filaire ou sans fil.

Dans l'optique d'assurer une reconnaissance d'un conducteur 17 habilité à piloter le véhicule, les éléments de mémoire 12a, 12b archivent des données biométriques du ou des conducteur (s) 17 du véhicule, comprenant des données faciales du visage du ou de chacun de ces conducteurs 17 tels que des traits du visage. Pour cela, les données biométriques du ou des conducteur (s) 17 autorisé (s) sont comprises dans des images de référence Ir préalablement enregistrées dans une base de données 14a, 14b comprise dans les éléments de mémoire 12a, 12b de l'unité de traitement 2a, 2b ou dans un serveur distant et donc externe au véhicule.

L'unité de traitement 2a, 2b est apte à mettre en œuvre un traitement numérique des images tel qu'un algorithme de reconnaissance du visage qui est stable dans toutes les conditions lumineuses ainsi que pour des occlusions partielles du visage du conducteur 17. Ce traitement numérique permet de réaliser un processus de reconnaissance faciale permettant d'identifier et/ou d'authentifier un conducteur 17 par comparaison d'une ou plusieurs images acquises du conducteur 17 avec les images de référence Ir enregistrées dans la base de données 14a, 14b.

À titre d'exemple, un tel traitement permet d'identifier sur les images de référence Ir des éléments de comparaison de référence tels que la forme globale du visage, la forme des yeux, la couleur des yeux, la forme du nez, la forme de la bouche, le type de chevelure, la distance entre les deux yeux, la distance entre le nez et la bouche, la distance entre les yeux et les oreilles, etc. Au cours de la comparaison de ces éléments de comparaison de référence avec des éléments de comparaison identifiés dans une ou plusieurs images acquises d'un conducteur 17 lors d'une identification et/ou d'une authentification de ce dernier, on note pour chaque élément comparé un score de comparaison, puis à la fin de la comparaison on détermine un degré global de comparaison Dg. Lorsque le degré global de comparaison Dg est supérieur ou égal à un degré seuil de comparaison Ds prédéfini, on considère que les données biométriques du conducteur 17 à identifier et/ou à authentifier correspondent aux données biométriques d'un conducteur 17 autorisé. Ainsi, le conducteur 17 à identifier et/ou à authentifier est alors identifié et/ou authentifié. On notera que ces données biométriques peuvent être préalablement acquises par le système de contrôle 1a, 1b afin de renseigner la base de données 14a, 14b notamment à partir du dispositif de reconnaissance optique 4a, 4b et de l'unité de traitement.

On notera que cette base de données comprend des fichiers relatifs à des images de référence Ir des conducteurs 17 autorisés à piloter le véhicule, des éléments de comparaison de référence pour chacune de ces images ainsi que pour chaque conducteur 17 un identifiant id unique associé à des données de profil P de ce conducteur 17. Ces données de profil P comprennent par exemple des caractéristiques intrinsèques du conducteur 17 telles que l'âge, le sexe, le poids la taille, etc... Ils comprennent également un niveau d'autorisation d'une utilisation du véhicule dont un niveau autorisant la conduite de ce dernier.

Le dispositif de reconnaissance optique 4a, 4b appelé par la suite « dispositif de reconnaissance » comprend au moins un appareil de prise de vue photographique tel qu'une caméra permettant de capturer au moins une image d'une partie du corps du conducteur 17 comme le visage de ce dernier dans le cadre par exemple d'une reconnaissance faciale du conducteur 17. Ce dispositif de reconnaissance 4a, 4b peut comprendre un support, notamment comportant une carte de circuit imprimé, sur lequel est placé un capteur électronique photosensible, ayant une matrice de cellules photosensibles, et un dispositif optique pourvu d'un objectif optique défini pour pouvoir former, sur le capteur une image focalisée notamment en champ proche. Comme, l'illustre la figure 2, le dispositif de reconnaissance 4a, 4b est agencé dans un cockpit 3 du véhicule et de préférence, il est intégré dans le tableau de bord du véhicule ou encore dans un miroir du véhicule. On entend ici par « cockpit », une partie avant d'un habitacle du véhicule qui est délimitée par une planche de bord supportée par une traverse, au moins en partie métallique, et formant un élément de structure du véhicule par la traverse et la planche de bord. Autrement dit, l'ensemble constitué par la traverse et la planche de bord est appelé « cockpit ».

De manière alternative, on notera que le dispositif de reconnaissance 4a, 4b peut être un dispositif électronique nomade ou encore portable tel que qu'un ordiphone ou encore une tablette numérique. Ce dispositif électronique comprend alors un module de communication qui est compatible avec le module 13a, 13b de l'unité de traitement 2a, 2b pour échanger des données avec ce dernier dont notamment des images capturées du conducteur 17 à partir d'un appareil de prise de vue photographique compris dans ce dispositif électronique.

Dans ce système 1a, 1b, le dispositif de contrôle du fonctionnement du moteur 5a, 5b appelé par la suite « dispositif de contrôle » comprend un calculateur qui est apte à piloter différentes composantes du moteur de ce véhicule tel que des injecteurs de carburant, des vannes de régulation de l'arrivée de gaz frais dans le moteur, des vannes de décharge associées de turbocompresseurs, des vannes de recyclage des gaz d'échappement , etc...Ce calculateur est également relié à différents capteurs de contrôle du fonctionnement des composantes du moteur. Un tel dispositif de contrôle 5a, 5b est prévu pour piloter le fonctionnement du moteur selon des configurations correspondant à différents modes de fonctionnement de ce moteur. Ce dispositif de contrôle 5a, 5b, est également apte à réaliser l'arrêt du moteur ou le démarrage de ce dernier.

Dans ces trois modes de réalisation, les capteurs d'activité 6a, 6b peuvent être de manière non exhaustive et non limitative : un capteur d'ouverture d'une portière donnant accès au cockpit 3, un capteur de présence situé dans le siège conducteur du véhicule, un capteur de changement de masse au niveau du siège conducteur ou encore un capteur de mouvement agencé dans le cockpit 3 du véhicule, etc...

Dans le premier mode de réalisation illustré sur les figures 1A, 2 et 3, le système 1a comprend également un module de validation d'une condition d'utilisation du véhicule 7a et une interface homme-machine 9 qui sont agencés dans le cockpit 3 du véhicule. Dans ce système 1a, l'unité de traitement 2a est reliée par le réseau de liaison 10 au dispositif de reconnaissance 4a, au dispositif de contrôle 5a, aux capteurs d'activité 6a, au module de validation d'une condition d'utilisation du véhicule 7a et à l'interface homme-machine 9.

Le module de validation d'une condition d'utilisation 7a également appelé par la suite « module de validation » comprend un sous-module de mesure 15 du taux d'alcoolémie et un dispositif de diffusion d'un code visuel 8a. Le sous-module de mesure 15 comprend des éléments de mesure du taux d'alcoolémie, du type éthylomètre électronique, conçus pour analyser l'air expiré par le conducteur 17 contrôlé, associés à une électronique de traitement adéquate. De manière alternative, le module de validation 7a peut comprendre des éléments de mesure du taux d'alcoolémie par spectrométrie proche infrarouge disposés de façon à s'étendre au contact de la peau du conducteur 17.

Le dispositif de diffusion d'un code visuel 8a appelé par la suite « dispositif de diffusion » comprend des ressources matérielles et logicielles, une interface d'affichage 16a tel qu'un écran et un module de communication compatible notamment avec celui de l'unité de traitement 2a. L'interface d'affichage 16a est apte à émettre des signaux lumineux comprenant ce code visuel Cv en direction du dispositif de reconnaissance 4a. Un tel code visuel Cv est alors diffusé par cette interface d'affichage 16a sur lequel il est alors visible. Dans cette configuration, ce code visuel Cv peut être un code à une ou deux dimensions comme par exemple un « code QR », ou « QR Code » en anglais, également connu sous la dénomination « datamatrix » et qui est visible sur la figure 3. Un tel code QR est classiquement constitué de modules noirs disposés dans un carré à fond blanc. L'agencement de ces points définit l'information que contient le code.

De manière alternative, l'interface d'affichage 16a de ce dispositif de diffusion 8a du module de validation 7a peut comprendre à la place ou en complément de l'écran, au moins une diode électroluminescente susceptible d'émettre des signaux lumineux et suivant une séquence générée pour diffuser le code visuel Cv en direction du dispositif de reconnaissance 4a. Dans ce contexte, la séquence d'émission des signaux lumineux générée constitue ce code visuel Cv.

Le code visuel Cv est de préférence généré de manière aléatoire par les ressources matérielles et logicielles de l'unité de traitement 2a ou de celles du serveur distant. Ce code visuel Cv étant ainsi généré est par la suite transmis notamment par l'intermédiaire du réseau de liaison 10 au dispositif de diffusion 8a. On notera dans une variante que les ressources matérielles et logicielles du dispositif de diffusion 8a peuvent également générer de manière aléatoire un tel code visuel Cv.

Dans ce système, le module de validation 7a peut comprendre de manière alternative un spectromètre de masse à la place du sous-module de mesure 15. Un tel spectromètre peut participer à l'identification du conducteur 17 ainsi qu'à l'évaluation du taux d'alcoolémie de ce dernier notamment grâce à l'analyse de différents composants constituant l'haleine du conducteur 17 permettant en plus d'une mesure du taux d'alcoolémie, d'identifier une empreinte olfactive de ce conducteur 17. Dans ce système 1a, l'interface homme-machine 9 comprend notamment un écran et des éléments de saisie tels qu'une couche tactile de l'écran, un clavier et/ou un système de commande vocale.

Dans les deuxième et troisième modes de réalisation illustrés sur la figure 1B, le système 1b comprend aussi un module de validation d'une condition d'utilisation du véhicule 7b et un dispositif de diffusion d'un code visuel 8b, le module de validation d'une condition d'utilisation du véhicule 7b et le dispositif de diffusion d'un code visuel 8b étant distincts l'un de l'autre. Dans ce système 1b, l'unité de traitement 2b est reliée par le réseau de liaison 10 au dispositif de reconnaissance 4b, au dispositif de contrôle 5b, aux capteurs d'activité 6b, au module de validation d'une condition d'utilisation du véhicule 7b et au dispositif de diffusion d'un code visuel 8b.

Le dispositif de diffusion d'un code visuel 8b appelé par la suite « dispositif de diffusion » peut être un dispositif électronique mobile c'est-à-dire un dispositif électronique nomade ou encore portable. Un tel dispositif électronique peut être un ordiphone ou encore une tablette numérique. Le dispositif de diffusion 8b comprend des ressources matérielles et logicielles, une interface d'affichage pourvue d'un écran, et un module de communication compatible notamment avec celui de l'unité de traitement 2b. L'interface d'affichage 16b est apte à émettre des signaux lumineux comprenant ce code visuel Cv en direction du dispositif de reconnaissance 4b. Un tel code visuel Cv est alors diffusé par cette interface d'affichage 16b sur lequel il est alors visible. Dans cette configuration, ce code visuel Cv peut être un code à une ou deux dimensions comme par exemple un « code QR », ou « QR Code » en anglais, également connu sous la dénomination « datamatrix ». Un tel code QR est classiquement constitué de modules noirs disposés dans un carré à fond blanc. L'agencement de ces points définit l'information que contient le code.

De manière alternative, l'interface d'affichage 16b de ce dispositif de diffusion 8b peut comprendre à la place ou en complément de l'écran, au moins une source lumineuse de type diode électroluminescente susceptible d'émettre des signaux lumineux et suivant une séquence générée pour diffuser le code visuel Cv en direction du dispositif de reconnaissance 4b. Dans ce contexte, la séquence d'émission des signaux lumineux générée constitue ce code visuel Cv.

Le code visuel Cv est de préférence généré de manière aléatoire par les ressources matérielles et logicielles de l'unité de traitement 2b ou de celles du serveur distant. Ce code visuel Cv étant par la suite transmis notamment par l'intermédiaire du réseau de liaison 10 au dispositif de diffusion 8b. On notera dans une variante que les ressources matérielles et logicielles du dispositif de diffusion 8b peuvent également générer de manière aléatoire un tel code visuel Cv.

Dans ce système 1b, le module de validation d'une condition d'utilisation 7b appelé par la suite « module de validation » comprend une interface homme-machine pourvue notamment d'un écran et d'éléments de saisie tels qu'une couche tactile de l'écran, un clavier et/ou un système de commande vocale.

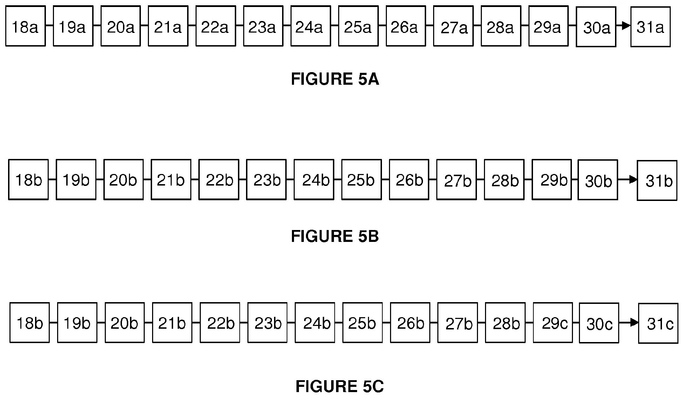

En référence aux figures 5A, 5B et 5C, l'invention porte également sur un procédé de contrôle de l'utilisation du véhicule par le conducteur 17.

Dans le premier mode de réalisation de l'invention illustré sur la figure 5A, ce procédé prévoit de contrôler que le conducteur 17 devant utiliser le véhicule ait accepté/validé une condition d'utilisation du véhicule. Cette condition d'utilisation est lié au fait qu'il ne doit pas présenter un taux d'alcoolémie trop élevé pour assurer le pilotage du véhicule pendant toute la phase d'utilisation de ce dernier. Le conducteur 17 doit accepter/valider cette condition en utilisant le module de validation 7a.

Dans ce contexte, ce procédé de contrôle de l'utilisation du véhicule par le conducteur 17 comprend une étape d'inhibition du démarrage 18a du moteur véhicule. Lors de cette étape d'inhibition 18a, l'unité de traitement 2a transmet une instruction au dispositif de contrôle 5a visant à interdire le démarrage de ce dernier puisque l'utilisation du véhicule est conditionnée par l'état éthylique du conducteur 17 à savoir à son taux d'alcoolémie.

Par la suite, le procédé comprend une étape de détection de l'installation 19a du conducteur 17 sur le siège conducteur du véhicule à partir de l'unité de traitement 2a et du capteur d'activité 6a tel que le capteur d'ouverture d'une portière du cockpit 3 ou du capteur de présence situé dans le siège du véhicule. De manière complémentaire, le dispositif de reconnaissance 4a peut participer à la détection de l'installation du conducteur 17 sur ce siège.

Dès lors que le conducteur 17 est installé dans le siège conducteur du véhicule, le procédé prévoit alors une étape d'identification 20a de ce conducteur 17 à partir de l'unité de traitement 2a, du dispositif de diffusion 8a compris dans le module de validation 7a et du dispositif de reconnaissance 4a. Cette étape d'identification 20a comprend alors une sous-étape de détection 21a de l'agencement dans un champ d'acquisition du dispositif de reconnaissance 4a, du visage du conducteur 17 et du dispositif de diffusion 8a compris dans le module de validation 7a. Autrement dit, lors de la réalisation de cette sous-étape 21a, le visage du conducteur 17 et l'interface d'affichage 16a dispositif de diffusion 8a compris dans le module de validation 7a, doivent être agencés relativement au dispositif de reconnaissance 4a de manière à ce qu'ils soient présents sur les mêmes images qui seront acquises par ce dispositif de reconnaissance 4a.

L'étape d'identification 20a comprend ensuite une sous-étape de reconnaissance faciale 22a du conducteur 17. Plus précisément, cette sous-étape de reconnaissance 22a prévoit la réalisation d'une acquisition d'au moins une image de tout ou partie du visage du conducteur 17 par le dispositif de reconnaissance 4a. Chaque image ainsi acquise est alors transmise par le dispositif de reconnaissance 4a à l'unité de traitement 2a. L'unité de traitement 2a met ensuite en œuvre le traitement numérique de chaque image acquise qu'il a reçue. Plus précisément, l'unité de traitement 2a réalise une comparaison d'au moins une image acquise du conducteur 17 avec les images de référence Ir enregistrées dans la base de données 14a. Lors de ce traitement, l'unité de traitement 2a détermine des éléments de comparaison résultant de chaque image acquise du conducteur 17 et les compare avec des éléments de comparaison de référence relatifs aux images de référence Ir enregistrées dans la base de données 14a. À la fin de la comparaison, l'unité de traitement 2a détermine un degré global de comparaison Dg. Lorsque le degré global de comparaison Dg est supérieur ou égal au degré seuil de comparaison Ds prédéfini les données biométriques du conducteur 17 à identifier correspondent alors aux données biométriques d'un conducteur 17 autorisé du véhicule identifié dans la base de données 14a par l'identifiant id unique. Ainsi le conducteur 17 est alors identifié.

L'étape d'identification 20a comprend également une sous-étape de reconnaissance 23a d'un code visuel Cv transmis par le dispositif de diffusion 8a compris dans le module de validation 7a. Lors de la réalisation de cette sous-étape 23a, le dispositif de diffusion 8a reçoit ou a préalablement reçu le code visuel Cv transmis par l'unité de traitement 2a ou par le serveur distant. Ce code visuel Cv est généré de manière aléatoire par l'unité de traitement 2a ou par le serveur distant. Le dispositif de diffusion 8a et en particulier l'interface d'affichage 16a émet des signaux lumineux en direction du dispositif de reconnaissance 4a afin de transmettre à ce dernier le code visuel Cv. Les signaux lumineux ainsi émis sont alors acquis par le dispositif de reconnaissance 4a qui transmet ensuite le code visuel Cv résultant du traitement de ces signaux lumineux à l'unité de traitement 2a. Cette unité de traitement 2a met par la suite en œuvre un processus de décodage du code visuel Cv ainsi reçu afin d'obtenir une clef d'identification dont la validité est ensuite vérifiée par cette unité de traitement 2a. Si la clef d'identification est valide, alors le module de validation 7a est identifié avec le conducteur 17 identifié.

À l'inverse, si la clef d'identification n'est pas valide, l'unité de traitement 2a transmet une instruction au dispositif de contrôle 5a visant à maintenir l'état d'inhibition du démarrage du moteur du véhicule. Dans ce contexte, l'unité traitement 2a peut également générer un message qui est transmis à l'interface homme-machine 9 visant à prévenir le conducteur 17 de cet état de fait, et initier une nouvelle réalisation de la sous-étape de reconnaissance 23a d'un code visuel Cv.

On notera que les deux sous-étapes de reconnaissance 22a, 23a sont réalisées de préférence de manière simultanée.

Le procédé comprend aussi une étape de validation 24a de la condition d'utilisation du véhicule par le conducteur 17 à partir de l'unité de traitement 2a et du module de validation 7a. Cette étape de validation 24a comprend alors une sous-étape de contrôle 25a du taux d'alcoolémie du conducteur 17. Lors de cette sous-étape de contrôle 25a, le module de validation 7a est manipulé par le conducteur 17 de manière à réaliser une mesure de taux d'alcoolémie dont une valeur Vm est déterminée par ce module de validation 7a et est transmise à l'unité de traitement 2a.

L'étape de validation 24a comprend ensuite une sous-étape d'évaluation 26a du taux d'alcoolémie du conducteur 17. Lors de cette sous-étape 26a, l'unité de traitement 2a compare la valeur mesurée Vm du taux d'alcoolémie du conducteur 17 à une valeur de référence Vr de taux d'alcoolémie. Si la valeur mesurée Vm est inférieure à la valeur de référence Vr, alors l'unité de traitement 2a met en œuvre une étape d'authentification 28a de l'utilisateur décrite par la suite. A l'inverse, si la valeur mesurée Vm est supérieure ou égale à la valeur de référence Vr, alors l'unité de traitement 2a génère une instruction qui est transmise au dispositif de contrôle 5a et qui vise à maintenir l'état d'inhibition du démarrage du moteur du véhicule.

On notera que l'étape d'identification 20a du conducteur 17 est effectuée de préférence de manière simultanée à la réalisation de la sous-étape de contrôle 25a de l'étape de validation 24a. En effet, l'identification du conducteur 17 et du module de validation 7a est réalisée de préférence durant l'utilisation du module de validation 7a par le conducteur 17.

Dans la mesure où, la valeur mesurée Vm du taux d'alcoolémie du conducteur 17 identifié en manipulant le module de validation 7a également identifié, est supérieure ou égale à la valeur de référence Vr, le procédé comprend une étape de diffusion 27a d'un message au conducteur 17 identifié. Lors de cette étape de diffusion 27a, l'unité de traitement 2a génère un message d'avertissement qui est transmis à l'interface homme-machine 9 visant à prévenir le conducteur 17 identifié qu'il ne peut pas procéder au pilotage du véhicule. Ce message est diffusé par l'écran de cette interface homme-machine 9. Un tel message peut comporter des données d'information relatives à la valeur mesurée Vm du taux d'alcoolémie mesuré et éventuellement la valeur de référence Vr du taux d'alcoolémie qui a été atteinte ou dépassée. De telles données d'information peuvent également comprendre des indications sur l'évolution dans le temps du taux d'alcoolémie mesuré du conducteur 17 et une détermination du temps nécessaire pour que la valeur mesurée Vs de ce taux d'alcoolémie devienne inférieure à la valeur de référence Vr. Autrement dit, de telles indications permettent ainsi d'informer le conducteur 17 de l'instant où il sera possible pour lui de réaliser le pilotage du véhicule. Ces indications sont déterminées à partir d'un algorithme mettant en œuvre un modèle de données prédictif prenant en compte une formule de référence de Widmark relative à l'élimination de l'éthanol dans le sang. Ce modèle de données prend également en compte les données de profil P du conducteur 17 comprenant notamment des caractéristiques intrinsèques du conducteur 17 telles que l'âge, le sexe, le poids la taille, etc... On notera que l'unité de traitement 2a peut être reliée à un capteur d'activité 6a compris dans le siège conducteur du véhicule permettant de déterminer le poids du conducteur 17. Ces indications peuvent être représentées sous la forme d'un graphique tel que la courbe visible sur la figure 4 qui est susceptible d'être affichée sur l'écran de l'interface homme-machine 9. Cette courbe représente la diminution du taux d'alcool dans le sang du conducteur en fonction du temps.

Lors de cette étape de diffusion 27a, l'unité de traitement 2a peut également sur la base de telles indications, planifier un envoi d'un message d'alerte à un dispositif mobile du conducteur 17 tel qu'un ordiphone, afin de l'avertir que la valeur mesurée Vs de son taux d'alcoolémie est maintenant inférieure à la valeur de référence Vr, et qu'il a alors la possibilité de conduire de nouveau le véhicule.

Le procédé prévoit ensuite une étape d'authentification 28a du conducteur 17 dès lors que la valeur mesurée Vm du taux d'alcoolémie lors de la sous-étape d'évaluation 26a est inférieure à la valeur de référence Vr et que le conducteur 17 est identifié et/ou le module de validation 7a est identifié. Lors de cette étape d'authentification 28a, l'unité de traitement 2a à partir de l'identifiant id unique du conducteur 17 identifié lors de l'étape d'identification 20a, sélectionne des données de profil P associées à cet identifiant id unique dans la base de données 14a. Ces données de profil P sont relatives au conducteur 17 et comprennent différents niveau d'autorisation d'une utilisation du véhicule dont un niveau autorisant la conduite de ce dernier. Ainsi, si les données de profil P du conducteur 17 comprennent ce niveau d'autorisation, l'unité de traitement 2a transmet alors une instruction au dispositif de contrôle 5a autorisant le démarrage du moteur du véhicule. Dans ce contexte, le conducteur 17 identifié est donc autorisé à piloter le véhicule. A l'inverse, si les données de profil P du conducteur 17 ne comprennent pas ce niveau d'autorisation, l'unité de traitement 2a génère un message d'avertissement signalant cet état de fait qui est transmis à l'interface homme-machine 9 et diffusé sur l'écran de cette interface 9. Dans ce contexte, le message peut inviter le conducteur non authentifié à s'enregistrer dans la base de données 14a du véhicule dans des conditions de sécurité pouvant requérir l'aval du propriétaire du véhicule.

Dès lors que le conducteur 17 est authentifié, le procédé comprend une étape de vérification 29a durant la phase d'utilisation du véhicule que le conducteur 17 identifié correspond bien au conducteur 17 pilotant le véhicule. En effet, la condition d'utilisation ayant été accepté par ce conducteur 17 identifié, il importe que ce soit lui qui pilote le véhicule pendant toute la phase d'utilisation de ce véhicule. Cette étape de vérification 29a comprend une sous-étape de détection 30a d'au moins un évènement lié à un déplacement anormal du conducteur 17 dans le cockpit 3 du véhicule lorsque ce dernier est l'arrêt. Par « déplacement anormal », il convient d'entendre ici que le conducteur 17 identifié a réalisé ou tente de réaliser un déplacement visant à le remplacer dans le cadre du pilotage du véhicule par un autre conducteur non identifié. Lors de cette sous-étape 30a, le dispositif de contrôle 5a transmet au moins un signal à l'unité de traitement 2a dès lors qu'un processus d'arrêt du véhicule est détecté. Il peut s'agir par exemple de manière non limitative et non exhaustive, d'un arrêt et/ou d'un redémarrage du moteur, d'une activation d'une fonction dite « Stop & Start » du moteur ou encore d'une activation ou désactivation du frein à main de parking du véhicule, etc... On notera que la fonction « Stop & Start » encore appelée « Stop & Go », permet de couper automatiquement le moteur lors d'un arrêt prolongé et de le redémarrer instantanément et en silence. L'unité de traitement 2a ainsi informé de ce processus d'arrêt, contrôle notamment de manière périodique au moins un évènement lié à un déplacement anormal du conducteur 17 dans le cockpit 3. Pour ce faire, l'unité de traitement 2a peut recevoir au moins un signal d'au moins un capteur d'activité 6a du véhicule ou encore du dispositif de reconnaissance 4a qui est apte également à détecter les mouvements réalisés par le conducteur 17 dans le cockpit 3.

Dans cette configuration, l'étape de vérification 29a peut comprendre alors une sous-étape de reconnaissance faciale 31a du conducteur 17 réalisée de manière périodique. Cette sous-étape 31a est mise en œuvre de manière similaire à la sous-étape de reconnaissance faciale 22a de l'étape d'identification 20a. Durant la réalisation de cette sous-étape 31a, dès lors que le conducteur 17 pilotant le véhicule pendant la phase d'utilisation de ce dernier, ne correspond pas au conducteur 17 identifié alors l'unité de traitement 2a génère une instruction qui est envoyée au dispositif de contrôle 5a visant à inhiber tout redémarrage du moteur du véhicule si ce dernier est à l'arrêt et à exécuter de nouveau les étapes de détection 18a, d'identification 20a, de validation 24a, diffusion 27a, d'authentification 28a et de vérification 29a du procédé. L'unité de traitement 2a génère également un message qui est transmis à l'interface homme-machine 9 visant à informer le conducteur 17 de cet état de fait.

De manière alternative ou complémentaire à la sous-étape de reconnaissance faciale 31a, dès lors qu'au moins un évènement lié à un déplacement anormal du conducteur 17 est détecté, l'unité de traitement 2a génère une instruction qui est envoyée au dispositif de contrôle 5a visant à inhiber tout redémarrage du véhicule si le moteur est à l'arrêt et d'exécuter de nouveau les étapes de détection 18a, d'identification 20a, de validation 24a, diffusion 27a, d'authentification 28a et de vérification 29a du procédé. Par la suite, l'unité de traitement 2a génère un message qui est transmis à l'interface homme-machine 9 visant à informer le conducteur non identifié de cet état de fait.

Dans le deuxième mode de réalisation de l'invention illustré sur la figure 5B, le procédé prévoit de contrôler que le conducteur 17 devant utiliser le véhicule ait accepté/validé une condition d'utilisation du véhicule. Cette condition d'utilisation est liée ici aux caractéristiques particulières du véhicule, relatives au fonctionnement en mode autonome de ce dernier. Cette condition comprend des règles d'utilisation du véhicule fonctionnant dans un mode autonome. Cette condition porte sur les responsabilités du conducteur 17 du véhicule lorsque ce dernier fonctionne selon ce mode autonome. Ainsi, cette condition doit être acceptée/validée par le conducteur 17 identifié du véhicule avant l'utilisation de ce dernier, lequel conducteur 17 doit être en charge du pilotage du véhicule pendant toute la phase d'utilisation de ce dernier quel que soit le mode de fonctionnement du véhicule.

Dans ce contexte, ce procédé de contrôle de l'utilisation du véhicule par le conducteur 17 comprend une étape d'inhibition du démarrage 18b du moteur véhicule. Lors de cette étape d'inhibition 18b, l'unité de traitement 2b transmet une instruction au dispositif de contrôle 5b visant à interdire le démarrage de ce dernier puisque l'utilisation du véhicule est conditionnée par la validation par le conducteur 17 de la condition d'utilisation du véhicule évoquée précédemment.

Par la suite, le procédé comprend une étape de détection 19b de l'installation du conducteur 17 sur le siège conducteur du véhicule à partir de l'unité de traitement 2b et du capteur d'activité 6b tel qu'un capteur d'ouverture d'une portière du cockpit 3 ou d'un capteur de présence situé dans le siège du véhicule. De manière complémentaire, le dispositif de reconnaissance 4b peut participer à la détection de l'installation du conducteur 17 sur ce siège.

Dès lors que le conducteur 17 est installé dans le siège conducteur du véhicule, le procédé prévoit alors une étape d'identification 20b de ce conducteur 17 à partir de l'unité de traitement 2b, du dispositif de diffusion 8b et du dispositif de reconnaissance 4b. Cette étape d'identification 20b comprend alors une sous-étape de détection 21b de l'agencement dans un champ d'acquisition du dispositif de reconnaissance 4b, du visage du conducteur 17 et du dispositif de diffusion 8b. Autrement dit, lors de la réalisation de cette sous-étape 21b, le visage du conducteur 17 et l'interface d'affichage 16b du dispositif de diffusion 8b, sont agencés relativement au dispositif de reconnaissance 4b de manière à ce qu'ils soient présents sur les mêmes images qui seront acquises par ce dispositif de reconnaissance 4b. L'étape d'identification 20b comprend ensuite une sous-étape de reconnaissance faciale 22b du conducteur 17. Plus précisément, cette sous-étape de reconnaissance 22b prévoit la réalisation d'une acquisition d'au moins une image de tout ou partie du visage du conducteur 17 par le dispositif de reconnaissance 4b. Par la suite chaque image ainsi acquise est alors transmise par le dispositif de reconnaissance 4b à l'unité de traitement 2b. L'unité de traitement 2b met ensuite en œuvre un traitement numérique de chaque image acquise qu'il a reçue. Plus précisément, l'unité de traitement 2b réalise une comparaison d'au moins une image acquise du conducteur 17 avec les images de référence Ir enregistrées dans la base de données 14b. Lors de ce traitement, l'unité de traitement 2b détermine des éléments de comparaison résultant de chaque image acquise du conducteur 17 et les compare avec des éléments de comparaison de référence relatifs aux images de référence Ir enregistrées dans la base de données 14b. À la fin de la comparaison, l'unité de traitement 2b détermine un degré global de comparaison Dg. Lorsque le degré global de comparaison Dg est supérieur ou égal au degré seuil de comparaison Ds prédéfini les données biométriques du conducteur 17 à identifier correspondent alors aux données biométriques d'un conducteur 17 autorisé du véhicule identifié dans la base de données 14b par l'identifiant id unique. Ainsi le conducteur 17 est alors identifié.

L'étape d'identification 20b comprend également une sous-étape de reconnaissance 23b d'un code visuel Cv transmis par le dispositif de diffusion 8b. Lors de la réalisation de cette sous-étape 23b, le dispositif de diffusion 8b reçoit ou a préalablement reçu un code visuel Cv transmis par l'unité de traitement 2b ou par un serveur distant. Ce code visuel Cv est généré de manière aléatoire par l'unité de traitement 2b ou par le serveur distant. Le dispositif de diffusion 8b et en particulier l'interface d'affichage 16b émet des signaux lumineux en direction du dispositif de reconnaissance 4b afin de transmettre à ce dernier le code visuel Cv. Les signaux lumineux ainsi émis sont alors acquis par le dispositif de reconnaissance 4b qui transmet ensuite le code visuel Cv résultant du traitement de ces signaux lumineux à l'unité de traitement 2b. Les signaux lumineux ainsi émis sont alors acquis par le dispositif de reconnaissance 4b qui transmet ensuite le code visuel Cv résultant du traitement de ces signaux lumineux à l'unité de traitement 2b. Cette unité de traitement 2b met par la suite en œuvre un processus de décodage du code visuel Cv ainsi reçu afin d'obtenir une clef d'identification dont la validité est ensuite vérifiée par cette unité de traitement 2b. Si la clef d'identification est valide, alors l'identité du conducteur 17 est confirmée. À l'inverse, si la clef d'identification n'est pas valide, l'unité de traitement 2b transmet une instruction au dispositif de contrôle 5b visant à maintenir l'état d'inhibition du démarrage du moteur du véhicule.

On notera que les deux sous-étapes de reconnaissance 22b, 23b sont réalisées de préférence de manière simultanée.

Le procédé comprend aussi une étape de validation 24b de la condition d'utilisation du véhicule par le conducteur 17 à partir de l'unité de traitement 2b et du module de validation 7b. Cette étape de validation 24b comprend alors une sous-étape de génération 25b par l'unité de traitement 2b d'un message à partir de données d'information relatives à la condition d'utilisation. De telles données d'information sont comprises dans la base de données 14b et peuvent également être mises à jour à partir d'une synchronisation des données de cette base de données 14b avec le serveur distant. L'étape de validation 24b prévoit ensuite une sous-étape de transmission 26b de ce message par l'unité de traitement 2b au module de validation 7b qui comprend une interface homme-machine. L'écran de cette interface homme-machine permet de diffuser un tel message au conducteur 17. L'étape de validation 24b comprend ensuite une sous-étape d'envoi 27b d'un signal à l'unité de traitement 2b généré à la suite d'une manipulation d'éléments de saisie du module de validation 7b par le conducteur 17 afin de sélectionner dans le message un élément d'acceptation ou de refus de la condition d'utilisation du véhicule. Ce signal reçu par l'unité de traitement 2b est analysé par ce dernier. Suite à cette analyse, si le signal comprend des données relatives à l'acceptation de la condition d'utilisation du véhicule, l'unité de traitement 2b met alors en œuvre une étape d'authentification 28b de l'utilisateur décrite par la suite. A l'inverse, si le signal comprend des données relatives au refus de la condition d'utilisation du véhicule, alors l'unité de traitement 2b génère une instruction sur la base de ce signal qui est transmise au dispositif de contrôle 5b et qui vise à maintenir l'état d'inhibition du démarrage du moteur du véhicule.

Le procédé prévoit ensuite une étape d'authentification 28b dudit conducteur 17, dès lors que la condition d'utilisation du véhicule a été acceptée par le conducteur 17 et que ce dernier est identifié. Lors de cette étape d'authentification 28b, l'unité de traitement 2b à partir de l'identifiant id unique du conducteur 17 identifié lors de l'étape d'identification 20b, sélectionne des données de profil P associées à cet identifiant id unique dans la base de données 14b. Ces données de profil P sont relatives au conducteur 17 et comprennent différents niveau d'autorisation d'une utilisation du véhicule dont un niveau autorisant la conduite de ce dernier. Ainsi, si les données de profil P du conducteur 17 comprennent ce niveau d'autorisation, l'unité de traitement 2b transmet alors une instruction au dispositif de contrôle 5b autorisant le démarrage du véhicule. Dans ce contexte, le conducteur 17 identifié est donc autorisé à piloter le véhicule. A l'inverse, si les données de profil P du conducteur 17 ne comprennent pas ce niveau d'autorisation, l'unité de traitement 2b génère un message d'avertissement signalant cet état de fait qui est transmis au module de validation 7b pour sa diffusion au conducteur 17 à partir de l'écran de ce dernier.

Dès lors que le conducteur 17 est authentifié, le procédé comprend une étape de vérification 29b durant la phase d'utilisation du véhicule que le conducteur 17 identifié correspond bien au conducteur pilotant le véhicule. En effet, la condition d'utilisation ayant été acceptée par ce conducteur 17 identifié il importe que ce soit lui qui pilote le véhicule pendant toute la phase d'utilisation de ce véhicule. Cette étape de vérification 29b comprend une sous-étape de détection 30b d'au moins un évènement lié à un déplacement anormal du conducteur 17 dans le cockpit 3 du véhicule lorsque ce dernier est l'arrêt. Par « déplacement anormal », il convient d'entendre ici que le conducteur 17 identifié a réalisé ou tente de réaliser un déplacement visant à le remplacer dans le cadre du pilotage du véhicule par un autre conducteur non identifié. Lors de cette sous-étape 30b, le dispositif de contrôle 5b transmet au moins un signal à l'unité de traitement 2b dès lors qu'un processus d'arrêt du véhicule est détecté. Il peut s'agir par exemple de manière non limitative et non exhaustive, d'un arrêt et/ou d'un redémarrage du moteur, d'une activation d'une fonction dite « Stop & Start » du moteur ou encore d'une activation ou désactivation du frein à main de parking du véhicule, etc... On notera que la fonction « Stop & Start » encore appelée « Stop & Go », permet de couper automatiquement le moteur lors d'un arrêt prolongé et de le redémarrer instantanément et en silence. L'unité de traitement 2b ainsi informé de ce processus d'arrêt contrôle notamment de manière périodique au moins un évènement lié à un déplacement anormal du conducteur 17 dans le cockpit 3. Pour ce faire, l'unité de traitement 2b peut recevoir au moins un signal d'au moins un capteur d'activité 6b du véhicule ou encore du dispositif de reconnaissance 4b qui est apte également à détecter les mouvements réalisés par le conducteur 17 dans le cockpit 3.

Dans cette configuration, dès lors qu'au moins un évènement lié à un déplacement anormal du conducteur 17 est détecté, l'unité de traitement 2b génère une instruction qui est envoyée au dispositif de contrôle 5b visant à inhiber tout redémarrage du moteur du véhicule si le moteur est à l'arrêt et à exécuter de nouveau les étapes de détection 18b, d'identification 20b, de validation 24b, diffusion 27b, d'authentification 28b et de vérification 29b du procédé. De manière alternative, l'unité de traitement 2b peut générer une instruction qui est transmise au dispositif de contrôle 5b afin d'inhiber les prochains modes de fonctionnement du moteur en mode autonome durant cette phase d'utilisation du véhicule. Par la suite, l'unité de traitement 2b génère un message relatif à cet état de fait qui est transmis au module de validation 7b pour sa diffusion au conducteur non identifié à partir de l'écran de ce dernier.

De manière alternative ou complémentaire à la sous-étape de détection 30b, cette étape de vérification 29b comprend une sous-étape de reconnaissance faciale 31b du conducteur 17 réalisée de manière périodique. Cette sous-étape 31b est mise en œuvre de manière similaire à la sous-étape de reconnaissance faciale 22b de l'étape d'identification 20b. Durant de cette sous-étape 31b, dès lors que le conducteur 17 pilotant le véhicule pendant la phase d'utilisation de ce dernier ne correspond pas au conducteur 17 identifié alors l'unité de traitement 2b génère une instruction qui est envoyée au dispositif de contrôle 5b visant à inhiber tout redémarrage du moteur du véhicule si le moteur est à l'arrêt et à exécuter de nouveau les étapes de détection 18b, d'identification 20b, de validation 24b, diffusion 27b, d'authentification 28b et de vérification 29b du procédé. De manière alternative, l'unité de traitement 2b peut générer une instruction qui est transmise au dispositif de contrôle 5b afin d'inhiber les prochains modes de fonctionnement du moteur en mode autonome durant cette phase d'utilisation du véhicule. Par la suite, l'unité de traitement 2b génère un message relatif à cet état de fait qui est transmis au module de validation 7b pour sa diffusion au conducteur non identifié à partir de l'écran de ce dernier.

Dans le troisième mode de réalisation de l'invention illustré sur la figure 5C, le procédé prévoit de contrôler que le conducteur 17 devant utiliser le véhicule ait accepté/validé une condition d'utilisation du véhicule. Cette condition comprend des règles d'utilisation du véhicule en autopartage ou en location. Cette condition d'utilisation est en relation avec une convention liée à cet autopartage ou à cette location du véhicule. Cette condition porte sur les responsabilités du conducteur 17 du véhicule définies dans cette convention. Ainsi, cette condition doit être acceptée/validée par le conducteur 17 identifié avant l'utilisation du véhicule, lequel conducteur 17 doit être en charge du pilotage du véhicule pendant toute la phase d'utilisation de ce dernier.

Ce procédé est similaire à celui du deuxième mode de réalisation de l'invention à l'exception de l'étape de vérification 29c que le conducteur 17 identifié correspond bien au conducteur 17 pilotant le véhicule durant la phase d'utilisation de cette dernière. Une telle étape 29c est mise en œuvre dans ce procédé dès lors que le conducteur 17 est authentifié. Cette étape 29c vise à assurer que le conducteur 17 identifié qui a accepté la condition d'utilisation soit celui qui pilote le véhicule pendant toute la phase d'utilisation de ce dernier. Cette étape de vérification 29c comprend une sous-étape de détection 30c d'au moins un événement lié à un déplacement anormal du conducteur 17 dans le cockpit 3 du véhicule lorsque ce dernier est l'arrêt. Par « déplacement anormal », il convient d'entendre ici que le conducteur 17 identifié a réalisé ou tente de réaliser un déplacement visant à le remplacer dans le cadre du pilotage du véhicule par un autre conducteur non identifié. Lors de cette sous-étape 30c, le dispositif de contrôle 5b transmet au moins un signal à l'unité de traitement 2b dès lors qu'un processus d'arrêt du véhicule est détecté. Il peut s'agir par exemple de manière non limitative et non exhaustive, d'un arrêt et/ou d'un redémarrage du moteur, d'une activation d'une fonction dite « Stop & Start » du moteur ou encore d'une activation ou désactivation du frein à main de parking du véhicule, etc... On notera que la fonction « Stop & Start » encore appelée « Stop & Go », permet de couper automatiquement le moteur lors d'un arrêt prolongé et de le redémarrer instantanément et en silence. L'unité de traitement 2b ainsi informé de ce processus d'arrêt contrôle notamment de manière périodique au moins un évènement lié à un déplacement anormal du conducteur 17 dans le cockpit 3. Pour ce faire, l'unité de traitement 2b peut recevoir au moins un signal d'au moins un capteur d'activité 6b du véhicule ou encore du dispositif de reconnaissance 4b qui est apte également à détecter les mouvements réalisés par le conducteur 17.

Dans cette configuration, dès lors qu'au moins un évènement lié à un déplacement anormal du conducteur 17 est détecté, l'unité de traitement 2b génère une instruction envoyée au dispositif de contrôle 5b visant à inhiber tout redémarrage du véhicule si le moteur est à l'arrêt et à exécuter de nouveau les étapes de détection 18b, d'identification 20b, de validation 24b, diffusion 27b, d'authentification 28b et de vérification 29c du procédé. Par la suite, l'unité de traitement 2b génère un message relatif à cet état de fait qui est transmis au module de validation 7b pour sa diffusion au conducteur non identifié à partir de l'écran de ce dernier.

De manière alternative ou complémentaire à la sous-étape de détection 30c, cette étape de vérification 29c, comprend une sous-étape de reconnaissance faciale 31c du conducteur 17 réalisée de manière périodique. Cette sous-étape 31c est mise en œuvre de manière similaire à la sous-étape de reconnaissance faciale 22b de l'étape d'identification 20b. Durant de cette sous-étape 31c, dès lors que le conducteur 17 pilotant le véhicule pendant la phase d'utilisation de ce dernier ne correspond pas au conducteur 17 identifié alors l'unité de traitement 2b génère une instruction envoyée au dispositif de contrôle 5b du moteur visant à inhiber tout redémarrage du véhicule si le moteur est à l'arrêt et à exécuter de nouveau les étapes de détection 18b, d'identification 20b, de validation 24b, diffusion 27b, d'authentification 28b et de vérification 29c du procédé. L'unité de traitement 2b génère également un message relatif à cet état de fait qui est transmis au module de validation 7b pour sa diffusion au conducteur non identifié à partir de l'écran de ce dernier.

En outre on notera que dans les trois modes de réalisation de ce procédé, le procédé peut comprendre un ensemble d'étapes permettant l'intégration de données biométriques d'un nouveau conducteur. Ces étapes pouvant être mises en œuvre avec le système présent et selon un procédé connu des connaissances générales de l'homme du métier.

## Revendications

1. Procédé de contrôle d'une utilisation d'un véhicule par un conducteur (17) comprenant les étapes suivantes :
- une étape d'identification (20a, 20b) du conducteur (17) comportant une sous-étape de reconnaissance faciale (22a, 22b) du conducteur (17) ;
- une étape de validation (24a, 24b) par le conducteur (17) d'une condition d'utilisation du véhicule, et
- une étape de vérification (29a, 29b, 29c) durant une phase d'utilisation du véhicule que le conducteur (17) identifié correspond au conducteur pilotant le véhicule,
**caractérisé en ce que** l'étape d'identification (20a, 20b) comprend une sous-étape de reconnaissance (23a, 23b) d'un code visuel (Cv) transmis par un dispositif de diffusion de code visuel (8a, 8b).

2. Procédé selon la revendication précédente, **caractérisé en ce que** :
- l'étape de validation (24a) comprend une sous-étape de contrôle (25a) d'un taux d'alcoolémie du conducteur (17) lors de laquelle un module de validation (7a) est manipulé par le conducteur (17) de manière à réaliser une mesure du taux d'alcoolémie dont une valeur (Vm) est déterminée par le module de validation (7a), et/ou
- l'étape de validation (24a) comprend une sous-étape d'évaluation (26a) d'un taux d'alcoolémie du conducteur (17) lors de laquelle une valeur mesurée (Vm) du taux d'alcoolémie du conducteur (17) est comparée à une valeur de référence (Vr) de taux d'alcoolémie, et/ou
- le procédé comprend une étape de diffusion (27a) d'un message au conducteur (17) si une valeur mesurée (Vm) du taux d'alcoolémie du conducteur (17) identifié est supérieure ou égale à une valeur de référence (Vr), et/ou
- le procédé comprend une étape d'authentification (28a) dudit conducteur (17) dès lors qu'une valeur mesurée (Vm) d'un taux d'alcoolémie du conducteur (17) identifié est inférieure à une valeur de référence (Vr).

3. Procédé selon la revendication 1, **caractérisé en ce que** l'étape de validation comprend :
- une sous-étape de génération (25b) par l'unité de traitement (2b) d'un message à partir de données d'information relatives à la condition d'utilisation du véhicule, notamment comprenant des règles d'utilisation du véhicule en autopartage ou en location ou fonctionnant dans une mode autonome ;
- une sous-étape de transmission (26b) d'un message par l'unité de traitement (2b) à un module de validation (7b), et
- une sous-étape d'envoi (27b) d'un signal à une unité de traitement (2b) généré à la suite d'une manipulation d'éléments de saisie du module de validation (7b), ledit signal comprenant des données relatives à l'acceptation ou au refus de la condition d'utilisation.

4. Procédé selon l'une quelconque des revendications précédentes, **caractérisé en ce que** :
- l'étape de vérification (29a, 29b, 29c) comprend une sous-étape de détection (30a, 30b, 30c) d'au moins un événement lié à un déplacement anormal du conducteur (17) dans un cockpit (3) du véhicule, et/ou
- une sous-étape de détection (30a, 30b, 30c) d'une étape de vérification (29a, 29b, 29c) prévoit une génération d'une instruction envoyée à un dispositif de contrôle du fonctionnement d'un moteur (5a, 5b) du véhicule visant à inhiber tout redémarrage de ce moteur si un tel moteur est à l'arrêt, et/ou
- une sous-étape de détection (30a, 30b, 30c) d'une étape de vérification (29a, 29b, 29c) prévoit une exécution des étapes de détection (18a, 18b), d'identification (20a, 20b), de validation (24a, 24b), diffusion (27a, 27b) d'authentification (28a, 28b) et de vérification (29a, 29b, 29c) du procédé, et/ou
- une sous-étape de reconnaissance (23a, 23b) d'un code visuel (Cv) de l'étape d'identification (20a, 20b) prévoit une génération aléatoire de ce code.

5. Système (1a, 1b) de contrôle d'une utilisation d'un véhicule par un conducteur (17) **caractérisé en ce qu'**il met en œuvre le procédé selon l'une quelconque des revendications précédentes, le système (1a, 1b) comprenant un dispositif de reconnaissance optique (4a, 4b), un module de validation d'une condition d'utilisation du véhicule (7a, 7b) et un dispositif de diffusion d'un code visuel (8a, 8b) connectés à une unité de traitement (2a, 2b) dudit système (1a, 1b) par l'intermédiaire d'un réseau de liaison (10) de ce système (1a, 1b).

6. Système (1a) selon la revendication précédente, **caractérisé en ce que** :
- le module de validation d'une condition d'utilisation du véhicule (7a) comprend un sous-module de mesure (15) d'un taux d'alcoolémie et le dispositif de diffusion d'un code visuel (8a), et/ou
- le système (1a) comprend une interface homme machine (9).

7. Système (1b) selon la revendication 5, **caractérisé en ce que** le module de validation d'une condition d'utilisation du véhicule (7b) comprend une interface homme-machine.

8. Programme d'ordinateur **caractérisé en ce qu'**il comprend des instructions de code de programme pour l'exécution des étapes du procédé selon l'une quelconque des revendications 1 à 4 lorsque ledit programme est exécuté par une unité de traitement (2a, 2b) d'un système (1a, 1b) selon l'une quelconque des revendications 5 à 7.

9. Véhicule, notamment un véhicule automobile, comprenant un système (1a, 1b) selon l'une quelconque des revendications 5 à 7.

## Patentansprüche

1. Verfahren zur Kontrolle einer Nutzung eines Fahrzeugs durch einen Fahrer (17), welches die folgenden Schritte umfasst:
- einen Schritt der Identifizierung (20a, 20b) des Fahrers (17), der einen Teilschritt der Gesichtserkennung (22a, 22b) des Fahrers (17) aufweist;
- einen Schritt der Validierung (24a, 24b) einer Nutzungsbedingung des Fahrzeugs durch den Fahrer (17), und
- einen Schritt der Überprüfung (29a, 29b, 29c), während einer Nutzungsphase des Fahrzeugs, ob der identifizierte Fahrer (17) dem Fahrer entspricht, der das Fahrzeug steuert,
**dadurch gekennzeichnet, dass** der Schritt der Identifizierung (20a, 20b) einen Teilschritt der Erkennung (23a, 23b) eines visuellen Codes (Cv) umfasst, der von einer Vorrichtung zum Rundsenden eines visuellen Codes (8a, 8b) gesendet wird.

2. Verfahren nach dem vorhergehenden Anspruch, **dadurch gekennzeichnet, dass**:
- der Schritt der Validierung (24a) einen Teilschritt der Kontrolle (25a) eines Blutalkoholgehalts des Fahrers (17) umfasst, in welchem ein Validierungsmodul (7a) von dem Fahrer (17) so gehandhabt wird, dass eine Messung des Blutalkoholgehalts durchgeführt wird, deren Wert (Vm) durch das Validierungsmodul (7a) bestimmt wird, und/oder
- der Schritt der Validierung (24a) einen Teilschritt der Beurteilung (26a) eines Blutalkoholgehalts des Fahrers (17) umfasst, in welchem ein Messwert (Vm) des Blutalkoholgehalts des Fahrers (17) mit einem Referenzwert (Vr) des Blutalkoholgehalts verglichen wird, und/oder
- das Verfahren einen Schritt des Rundsendens (27a) einer Nachricht an den Fahrer (17) umfasst, falls ein Messwert (Vm) des Blutalkoholgehalts des identifizierten Fahrers (17) höher oder gleich einem Referenzwert (Vr) ist, und/oder
- das Verfahren einen Schritt der Authentifizierung (28a) des Fahrers (17) umfasst, sofern ein Messwert (Vm) eines Blutalkoholgehalts des identifizierten Fahrers (17) niedriger als ein Referenzwert (Vr) ist.

3. Verfahren nach Anspruch 1, **dadurch gekennzeichnet, dass** der Schritt der Validierung umfasst:
- einen Teilschritt der Erzeugung (25b), durch die Verarbeitungseinheit (2b), einer Nachricht von auf die Nutzungsbedingung des Fahrzeugs bezogenen Informationsdaten, die insbesondere Regeln der Nutzung des Fahrzeugs als Carsharing- oder Mietfahrzeug oder beim Betrieb in einem autonomen Modus umfassen;
- einen Teilschritt der Übertragung (26b) einer Nachricht durch die Verarbeitungseinheit (2b) an ein Validierungsmodul (7b); und
- einen Teilschritt des Sendens (27b) eines Signals an eine Verarbeitungseinheit (2b), das im Ergebnis einer Handhabung von Erfassungselementen des Validierungsmoduls (7b) erzeugt wird, wobei das Signal Daten umfasst, die sich auf die Annahme oder auf die Ablehnung der Nutzungsbedingung beziehen.

4. Verfahren nach einem der vorhergehenden Ansprüche, **dadurch gekennzeichnet, dass**:
- der Schritt der Überprüfung (29a, 29b, 29c) einen Teilschritt der Detektion (30a, 30b, 30c) wenigstens eines Ereignisse umfasst, dass mit einer anormalen Bewegung des Fahrers (17) in einem Cockpit (3) des Fahrzeugs zusammenhängt, und/oder
- ein Teilschritt der Detektion (30a, 30b, 30c) eines Schrittes der Überprüfung (29a, 29b, 29c) eine Erzeugung einer Anweisung vorsieht, die an eine Vorrichtung zur Steuerung des Betriebs eines Motors (5a, 5b) des Fahrzeugs gesendet wird und darauf abzielt, jedes erneute Starten dieses Motors zu verhindern, falls ein solcher Motor stillsteht, und/oder
- ein Teilschritt der Detektion (30a, 30b, 30c) eines Schrittes der Überprüfung (29a, 29b, 29c) eine Ausführung der Schritte der Detektion (18a, 18b), der Identifizierung (20a, 20b), der Validierung (24a, 24b), des Rundsendens (27a, 27b), der Authentifizierung (28a, 28b) und der Überprüfung (29a, 29b, 29c) des Verfahrens vorsieht, und/oder
- ein Teilschritt der Erkennung (23a, 23b) eines visuellen Codes (Cv) des Schrittes der Identifizierung (20a, 20b) eine zufällige Erzeugung dieses Codes vorsieht.

5. System (1a, 1b) zur Kontrolle einer Nutzung eines Fahrzeugs durch einen Fahrer (17), **dadurch gekennzeichnet, dass** es das Verfahren nach einem der vorhergehenden Ansprüche anwendet, wobei das System (1a, 1b) eine Vorrichtung zur optischen Erkennung (4a, 4b), ein Modul zur Validierung einer Nutzungsbedingung des Fahrzeugs (7a, 7b) und eine Vorrichtung zum Rundsenden eines visuellen Codes (8a, 8b) umfasst, die mit einer Verarbeitungseinheit (2a, 2b) des Systems (1a, 1b) über ein Verbindungsnetz (10) dieses Systems (1a, 1b) verbunden sind.

6. System (1a) nach dem vorhergehenden Anspruch, **dadurch gekennzeichnet, dass**:
- das Modul zur Validierung einer Nutzungsbedingung des Fahrzeugs (7a) ein Untermodul zur Messung (15) eines Blutalkoholgehalts und die Vorrichtung zum Rundsenden eines visuellen Codes (8a) umfasst, und/oder
- das System (1a) eine Mensch-Maschine-Schnittstelle (9) umfasst.

7. System (1b) nach Anspruch 5, **dadurch gekennzeichnet, dass** das Modul zur Validierung einer Nutzungsbedingung des Fahrzeugs (7b) eine Mensch-Maschine-Schnittstelle umfasst.

8. Computerprogramm, **dadurch gekennzeichnet, dass** es Programmcodeanweisungen zur Ausführung der Schritte des Verfahrens nach einem der Ansprüche 1 bis 4, wenn das Programm von einer Verarbeitungseinheit (2a, 2b) eines Systems (1a, 1b) nach einem der Ansprüche 5 bis 7 ausgeführt wird, umfasst.

9. Fahrzeug, insbesondere Kraftfahrzeug, welches ein System (1a, 1b) nach einem der Ansprüche 5 bis 7 umfasst.

## Claims

1. Method for controlling the use of a vehicle by a driver (17), comprising the following steps:
- an identification step (20a, 20b) of identifying the driver (17), comprising a facial recognition sub-step (22a, 22b) of recognizing the face of the driver (17);
- a validation step (24a, 24b) of the driver (17) validating a usage condition of the vehicle, and
- a checking step (29a, 29b, 29c) of checking, during a usage phase of the vehicle, that the identified driver (17) corresponds to the driver driving the vehicle,
**characterized in that** the identification step (20a, 20b) comprises a recognition sub-step (23a, 23b) of recognizing a visual code (Cv) transmitted by a visual code broadcasting device (8a, 8b).

2. Method according to the preceding claim, **characterized in that**:
- the validation step (24a) comprises a monitoring sub-step (25a) of monitoring a blood alcohol level of the driver (17), in which a validation module (7a) is manipulated by the driver (17) so as to measure the blood alcohol level, a value (Vm) of which is determined by the validation module (7a), and/or
- the validation step (24a) comprises an evaluation sub-step (26a) of evaluating a blood alcohol level of the driver (17), in which a measured value (Vm) of the blood alcohol level of the driver (17) is compared to a blood alcohol level reference value (Vr), and/or
- the method comprises a broadcasting step (27a) of broadcasting a message to the driver (17) if a measured value (Vm) of the blood alcohol level of the identified driver (17) is greater than or equal to a reference value (Vr), and/or
- the method comprises an authentication step (28a) of authenticating said driver (17) as soon as a measured value (Vm) of a blood alcohol level of the identified driver (17) is lower than a reference value (Vr).

3. Method according to Claim 1, **characterized in that** the validation step comprises:
- a generation sub-step (25b) of the processing unit (2b) generating a message from information data relating to the usage condition of the vehicle, in particular comprising rules for using the vehicle in car-sharing mode or in leasing mode or operating in an autonomous mode;
- a transmission sub-step (26b) of the processing unit (2b) transmitting a message to a validation module (7b), and
- a sending sub-step (27b) of sending a signal to a processing unit (2b), generated following manipulation of input elements of the validation module (7b), said signal comprising data relating to the acceptance or to the denial of the usage condition.

4. Method according to any one of the preceding claims, **characterized in that**:
- the checking step (29a, 29b, 29c) comprises a detection sub-step (30a, 30b, 30c) of detecting at least one event linked to an abnormal movement of the driver (17) in a cockpit (3) of the vehicle, and/or
- a detection sub-step (30a, 30b, 30c) of a checking step (29a, 29b, 29c) makes provision to generate an instruction that is sent to a device for controlling the operation of an engine (5a, 5b) of the vehicle intended to prevent any restarting of this engine if such an engine is at a standstill, and/or
- a detection sub-step (30a, 30b, 30c) of a checking step (29a, 29b, 29c) makes provision to execute one of the detection (18a, 18b), identification (20a, 20b), validation (24a, 24b), broadcasting (27a, 27b), authentication (28a, 28b) and checking (29a, 29b, 29c) steps of the method, and/or
- a recognition sub-step (23a, 23b) of recognizing a visual code (Cv) of the identification step (20a, 20b) makes provision to randomly generate this code.

5. System (1a, 1b) for controlling the use of a vehicle by a driver (17), **characterized in that** it implements the method according to any one of the preceding claims, the system (1a, 1b) comprising an optical recognition device (4a, 4b), a validation module for validating a usage condition of the vehicle (7a, 7b) and a broadcasting device for broadcasting a visual code (8a, 8b) that are connected to a processing unit (2a, 2b) of said system (1a, 1b) via a connection network (10) of this system (1a, 1b).

6. System (1a) according to the preceding claim, **characterized in that**:
- the validation module for validating a usage condition of the vehicle (7a) comprises a measurement submodule (15) for measuring a blood alcohol level and the broadcasting device for broadcasting a visual code (8a), and/or
- the system (1a) comprises a human-machine interface (9) .

7. System (1b) according to Claim 5, **characterized in that** the validation module for validating a usage condition of the vehicle (7b) comprises a human-machine interface.

8. Computer program, **characterized in that** it comprises program code instructions for executing the steps of the method according to any one of Claims 1 to 4 when said program is executed by a processing unit (2a, 2b) of a system (1a, 1b) according to any one of Claims 5 to 7.

9. Vehicle, in particular a motor vehicle, comprising a system (1a, 1b) according to any one of Claims 5 to 7.
